# EUROPÄISCHE PATENTANMELDUNG

(11) **EP 2 157 635 A2**
(43) Veröffentlichungstag der Anmeldung: **24.02.2010**
(21) Anmeldenummer: 09161678.9
(22) Anmeldetag: 02.06.2009
(51) Int. Cl.: H01M 2/14

(54) **Verfahren zum Schneiden mechanisch empfindlicher Bahnenware**

(30) Priorität: 31.07.2008 DE 102008040894
(71) Anmelder: Evonik Degussa GmbH, 45128 Essen (DE)
(72) Erfinder: Schuch, Andreas, 22393, Hamburg (DE); Hying, Christian, 46414, Rhede (DE); Hennige, Volker, 48249, Dülmen (DE); Schormann, Andreas, 02692, Doberschau (DE); Hörpel, Gerhard, 48301, Nottuln (DE); Pascaly, Matthias, 48163, Münster (DE)

(57) **Zusammenfassung**

Die vorliegende Erfindung betrifft ein Verfahren zum Ablägen von Bahnenware, die abrasive Partikel innerhalb und/oder auf der Oberfläche eines Trägers aufweist.

## Beschreibung

Die Erfindung betrifft ein Verfahren zum Schneiden von abrasiver Bahnenware, also Material, bei dem sich abrasive Partikel innerhalb und/oder auf der Oberfläche eines Trägers befinden. Die Erfindung betrifft insbesondere ein Verfahren zum Schneiden von keramischen bzw. keramische oder oxidische Bestandteile enthaltenden Separatoren, die zum Beispiel in Lithium-lonen-Batterien eingesetzt werden.

Für den Einsatz in Lithium-lonen-Batterien werden unter anderem Separatoren verwendet, die z. B. aus einer mit keramischen Bestandteilen beschichteten oder keramische Bestandteile enthaltenden Trägersubstanz bestehen. Die keramischen Bestandteile dieser sogenannten keramischen Separatoren können aus Aluminiumoxid (Al₂O₃) und Siliziumoxid (SiO₂) sowie weiteren Metalloxiden wie bspw. BaTiO₃, ZrO₂ oder TiO₂ bestehen. Die Trägersubstanzen können dabei z. B. aus Polymeren wie Polyolefinen, Polyestern, Polyimiden bestehen. Die keramischen Bestandteile können sowohl in das Polymer eingebracht werden, wobei dann das Polymer als Matrix und das Oxid als Füller dient, als auch auf einen porösen Polymerträger in Form einer Imprägnierung, Bedruckung oder Tränkung aufgebracht werden.

Keramische oder halbkeramische (hybride) Separatoren oder als Separatoren einsetzbare keramische Membranen sind z. B. aus WO 99/15262 hinlänglich bekannt. Aus dieser Schrift kann auch die Herstellung von Separatoren oder Membranen, die als Separatoren geeignet sind, entnommen werden. Vorzugsweise werden als poröse Träger für die genannten Separatoren allerdings keine elektrisch leitfähigen Träger wie z. B. Metallgewebe eingesetzt, da es bei der Verwendung solcher Träger zu inneren Kurzschlüssen kommen kann, wenn die keramische Beschichtung des Trägers nicht vollständig ist. Die genannten Separatoren weisen deshalb bevorzugt Träger aus nicht elektrisch leitfähigen Materialien auf.

In neuester Zeit sind hybride Separatoren entwickelt worden, die Keramiken und Polymere aufweisen. In DE 102 08 277 wurden Separatoren basierend auf polymeren Substratmaterialien, wie z. B. Polymervliesen, hergestellt, die eine poröse, elektrisch isolierende, keramische Beschichtung aufweisen.

Solche keramischen Separatoren werden üblicherweise mit gewöhnlichen handelsüblichen Schneidutensilien wie Rundmessern, Scheren, Hebelscheren, etc. mit Klingen aus herkömmlichem oder auch gehärtetem Messerstahl in die gewünschte Form geschnitten. Hierbei ist nachteilig, dass beim Schneiden zum Teil ein enormer Materialverlust durch Abrieb beobachtet wird. Der Abrieb wiederum tritt oft in Form schädlicher, zumindest störender Stäube auf.

Keramische Separatoren, die z. B. als Rollenware vorliegen, werden für ihre Verwendung in Lithium-lonen-Batterien auf die dafür notwendigen Dimensionen geschnitten. Automatische und halbautomatische Schneidetische sind hierfür Stand der Technik, wobei das zu schneidende Material stabil sein muss und mittels Klemmvorrichtungen gegriffen wird, in die Schneidvorrichtung transportiert, unter Druck geschnitten und anschließend weiter transportiert wird.

Separatoren können jedoch spröde, zumindest sehr dünn sein. Dadurch ist diese Vorgehensweise nicht möglich, ohne das Material zu schädigen. Ausserdem erlaubt das Schneiden quer zur Transportrichtung keinen kontinuierlichen Transport des Materials, das im Falle von Separatoren zumeist in Form von Bahnenware vorliegt. Das Schneiden quer zur Transportrichtung wird an dieser Stelle und im Folgenden mit *Ablängen* bezeichnet. Unter *Schneiden* wird im Folgenden das Schneiden von Bahnenware in Transportrichtung, gleichbedeutend mit der Richtung, in der diese Bahnenware auf aufgerollt wird, verstanden.

Das Ablängen von geschichteter und damit mehrlagiger Bahnenware führt dazu, dass die oberen Lagen durch das - auf mikroskopischer Skala - keilförmige Messer seitlich verschoben und / oder gequetscht werden.

Aufgabe der vorliegenden Erfindung war es also, ein Verfahren zum Ablängen von Bahnenware bereit zu stellen, das einen kontinuierlichen Transport der Bahnenware zulässt, insbesondere in einen kontinuierlichen Rolle-zu-Rolle Prozess integriert werden kann, mittels dessen Bahnenware, insbesondere Batterie Separatorware, heutzutage üblicherweise produziert und gehandhabt wird.

Gelöst wird diese Aufgabe durch ein Verfahren zum Ablängen von Bahnenware, das die Merkmale des kennzeichnenden Teils von Anspruch 1 aufweist.

Gegenstand der vorliegenden Erfindung ist also ein Verfahren zum Ablängen von Bahnenware, die einen Träger und abrasive Partikel aufweist, wobei sich die abrasiven Partikel innerhalb und/oder auf zumindest einem Teil der Oberfläche des Trägers befinden, umfassend die Schritte
(a) Bereitstellung der Bahnenware,
(b) Schneiden der Bahnenware auf die benötigte Breite, und anschließend
(c) Aufwickeln der nach Schritt (b) erhaltenen Bahnenware auf einen Kern oder Hülse, und anschließend
(d) Ablängen der Bahnenware auf dem Kern oder der Hülse längs der Achse des Kerns oder der Hülse.

Das erfindungsgemäße Verfahren hat den Vorteil, in den laufenden Produktionsprozeß für Bahnenware jeglicher Art, insbesondere Separatoren, integrierbar zu sein. Vorteil des erfindungsgemäßen Verfahrens ist auch, dass ein für das Ablängen erforderlicher gesonderter Schritt, die Bahnenware zu fixieren, überflüssig wird, da die Bahnenware durch das Aufwickeln automatisch fixiert wird.

Weiterer Gegenstand der vorliegenden Erfindung ist die konfektionierte Ware, die nach dem erfindungsgemäßen Verfahren erhalten wird, sowie die Verwendung der erfindungsgemäßen Ware als Separator in Batterien.

Die Erfindung wird im Folgenden beispielhaft näher erläutert.

In Schritt (c) des erfindungsgemäßen Verfahrens kann vorzugsweise ein Kern oder eine Hülse eingesetzt werden, deren Durchmesser das 100- bis 10⁵-fache der Dicke der Bahnenware beträgt.

Es kann weiterhin vorteilhaft sein, in Schritt (c) des erfindungsgemäßen Verfahrens Bahnenware mit einer Dicke von 5 µm bis 100 µm einzusetzen.

Es können von 2 bis 1000 Lagen Bahnenware auf den Kern oder die Hülse in Schritt (c) aufgewickelt werden, wobei die Anzahl der Lagen aus dem abgerundeten Quotienten aus der Differenz zwischen dem größten Durchmesser des nach Schritt (c) erhaltenen Körpers senkrecht zur Körper Achse und dem Durchmesser des Kerns oder der Hülse und dem zweifachen der Dicke der Bahnenware erhalten wird.

Es besteht die Möglichkeit, in Schritt (d) des erfindungsgemäßen Verfahrens zumindest ein festes oder rotierendes Messer einzusetzen.

Vorzugsweise kann in Schritt (d) die Bahnenware in einem Schnitt längs der Achse von außen in Richtung der Rotationsachse des nach Schritt (c) erhaltenen Körpers abgelängt werden.

## Patentansprüche

1. Verfahren zum Ablängen von Bahnenware, die einen Träger und abrasive Partikel aufweist, wobei sich die abrasiven Partikel innerhalb und/oder auf zumindest einem Teil der Oberfläche des Trägers befinden, umfassend die Schritte
(a) Bereitstellung der Bahnenware,
(b) Schneiden der Bahnenware auf die benötigte Breite, und anschließend
(c) Aufwickeln der nach Schritt (b) erhaltenen Bahnenware auf einen Kern oder Hülse, und anschließend
(d) Ablängen der Bahnenware auf dem Kern oder der Hülse längs der Achse des Kerns oder der Hülse.

2. Verfahren nach Anspruch 1,
**dadurch gekennzeichnet, dass**
in Schritt (c) ein Kern oder eine Hülse eingesetzt wird, deren Durchmesser das 100- bis 10⁵-fache der Dicke der Bahnenware beträgt.

3. Verfahren nach einem der Ansprüche 1 oder 2,
**dadurch gekennzeichnet, dass**
in Schritt (c) Bahnenware mit einer Dicke von 5 µm bis 100 µm eingesetzt wird.

4. Verfahren nach zumindest einem der Ansprüche 1 bis 3,
**dadurch gekennzeichnet, dass**
in Schritt (c) von 2 bis 1000 Lagen Bahnenware auf den Kern oder die Hülse aufgewickelt werden, wobei die Anzahl der Lagen aus dem abgerundeten Quotienten aus der Differenz zwischen dem größten Durchmesser des nach Schritt (c) erhaltenen Körpers senkrecht zur Körper Achse und dem Durchmesser des Kerns oder der Hülse und dem zweifachen der Dicke der Bahnenware erhalten wird.

5. Verfahren nach Anspruch 1,
**dadurch gekennzeichnet, dass**
in Schritt (d) zumindest ein festes oder rotierendes Messer eingesetzt wird.

6. Verfahren nach zumindest einem der Ansprüche 1 bis 5,
**dadurch gekennzeichnet, dass**
in Schritt (d) die Bahnenware in einem Schnitt längs der Achse von außen in Richtung der Rotationsachse des nach Schritt (c) erhaltenen Körpers abgelängt wird.

7. Konfektionierte Ware, erhalten nach zumindest einem der Ansprüche 1 bis 6.

8. Verwendung der Bahnenware nach Anspruch 7 als Separator in Batterien.
